# EUROPEAN PATENT SPECIFICATION

(11) **EP 1 584 158 B1**
(45) Date of publication and mention of the grant of the patent: **04.04.2012**
(21) Application number: 03782729.2
(22) Date of filing: 29.12.2003
(51) Int. Cl.: H04L 12/24

(54) **BUILDING MANAGEMENT SYSTEM WITH REMOTE CONFIGURATION**
GEBÄUDEVERWALTUNGSSYSTEM MIT FERNGESTEUERTER KONFIGURATION
GESTION DE BATIMENTS AVEC UNE CONFIGURATION A DISTANCE

(30) Priority: 09.01.2003 GB 0300499
(43) Date of publication of application: 12.10.2005
(73) Proprietor: SATCHWELL CONTROL SYSTEMS LIMITED, London SW1P 1BX (GB)
(72) Inventor: HUSEIN, Sajed, c/o Satchwell Control Systems Ltd., London SW1P 1BX (GB)
(74) Representative: Milanov, Nina Vendela Maria
(86) International application number: PCT/GB2003/005705
(87) International publication number: WO 2004/064323

(56) References cited:
- WO-A-00/48376
- GB-A- 2 369 471
- US-B1- 6 353 393
- US-B1- 6 393 020

## Description

The present invention relates to a novel Building Management System and method for the configuration thereof.

Building Managementv Systems (BMS) are used to perform environmental control and energy management functions within commercial buildings and facfories, and may exercise control over a variety of factors ranging from the mundane (eg. room. temperature, room humidity) to the critical (eg. manufacturing parameters, security, life support and so on). They typically comprise embedded devices known as controller devices (or simply controllers), which perform data acquisition and some form of control and reporting activities. These controllers are networked together using a communications system with a front-end device (for example a personal computer or other suitable type of data processor) as a means of providing a user interface to the system.

WO 00/48376 A1 discloses a building information system and method for processing building-related data, where a system, based on client-server configuration, i.e. a client communicates with a server over a communications network. US 6,393,020 B1 discloses a gated multi-drop communication system allowing multiple local simple communication buses to be selectively and separately connected.

The communications system used in BMS has traditionally been based on proprietary architecture However, within the past few years, an increasing number of BMS manufacturers have embraced industry standard communication architectures such as those used in standard IT (Information Technology) and office based systems. This has enabled the manufacturer to take advantage of industry standard techniques that are prevalent in such systems.

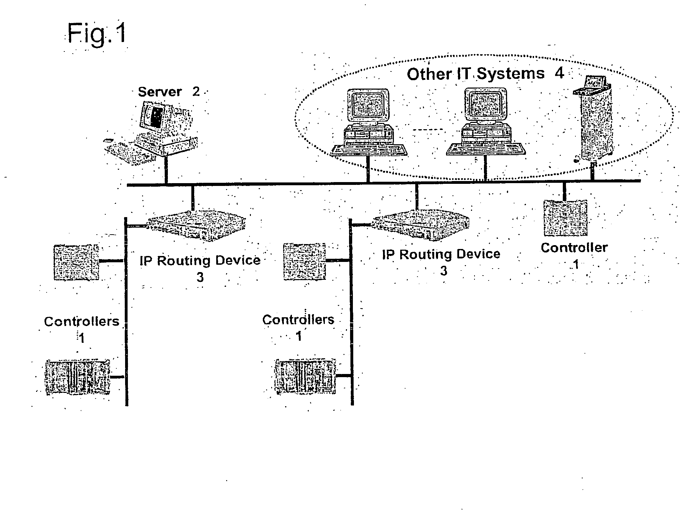

One of the major challenges faced by the installers of BMS is to be able to perform fast and accurate system configuration, this is especially critical when the system consists of a large number of controllers (>20). Typically, system configuration is a two-stage process; the first stage requires the installer/engineer to manually enter data (including at least a device number and Internet Protocol (IP) address) into each controller using a dumb terminal or a laptop PC. The second stage involves the downloading of the complete configuration data from the front-end device. This process, however, can lead to number of potential problems, as will be explained below in greater detail, with reference to Figure 1.

Figure 1 shows, in outline, the network layout of a standard Building Management System. The system comprises a plurality of controllers 1 and a server 2 (normally a PC, which operates as the front-end device). One or more routing devices 3 (routers) are used to create a hierarchical network layout, whereby the server 2 "sits" on the backbone network and the controllers 1 are clustered on one or more sub-networks. Both the controllers 1 and the server 2 use IP technology (IP addressing and routine), which allows standard "off-the-shelf" IP routing devices to be used as the routers 3. In some cases the network may also be utilised by other IT systems 4.

The system is based on a distributed architecture whereby the controllers 1 are highly intelligent in that they can perform complex control functions. Once set-up, the controllers 1 are fully capable of operating without any user intervention and do not necessarily require the use of a front-end application running on the server 2. This is achieved by a thorough configuration of the controllers 1, during the installation stage.

The instauration of the system involves the following stages:
1. The installer lays-out the communication lines (or uses existing ones if appropriate) and powers-up the controllers; this ensures that each controller is operational. At this stage, the controller is in a "non-commissioned" state. Once this process is complete, the installer then hands over the site to the commissioning engineer.
2. The commissioning engineer partially configures each controller on-site (using a hand-held device e.g., terminal or a notebook PC), by giving each controller a unique device identifier and an IP address. The controllers remain in their un-commissioned state, although it is now possible to communicate with the devices given that each has an IP address.
3. On the server, the engineer defines each controller by specifying its device identifier and IP addresses and inputting additional configuration data such as control algorithms, cross-references and/or other parameters.
4. The final stage involves the manual download of the configuration data input at step 4 to each of the controllers. Each controller, upon receiving the data, performs a reset and restarts with the new parameters - the controller will then be in a "commissioner" state.

Once all the controllers on the site have been commissioned, the BMS system can then operate normally.

However, setting up a BMS in the manner described above can suffer from a number of potentially very serious drawbacks. A typical medium sized BMS site can have around 40+ controllers, but in most cases BMS projects involve large buildings where the number of controllers can reach the 100s. One of the largest BMS sites currently in operation has 520 controllers and current predictions indicate that this will become a typical figure for future BMS sites.

In a medium sized site (with 40+ controllers) the above configuration process can be long and tedious; typically the configuration time is in the order of about 5-10 minutes per controller, which translates into about 4 hours of configuration time. This overheard can have major implication on project costs as well as the time to complete the site configuration.

Furthermore, where a commissioning process involves different stages of configuration, there exists a high probability that an engineer could inadvertently make mistakes. The configuration process involves entering a number of system parameters such as Device Identifier, IP addresses, Default & Backup Server information. In particular, errors may be caused by having to manually enter IP address configuration, such as typographical errors and/or address conflicts caused by a currently assigned IP address accidentally being reissued to another controller.

In some cases, the error may be such that the controller may appear to the commissioning engineer as being fully operational even though wrong parameters were accidentally used. Here the mistakes are not detected until the site is up and runing. This often can lead to a dangerous situation when the controllers are geared towards managing complex plants and machinery.

It will be apparent from the above that the current configuration process provides a good deal of scope for error during configuration stage. This, together with the factual time required to set-up the site, can lead to unexpected delays and costs.

One possible alternative to using the current configuration process would be to make use of the Dynamic Host Configuration Protocol (DHCP) to partly automate the process.

Dynamic Host Configuration Protocol (DHCP) is a standard protocol defined by RFC (Request For Comment) 1541 (which is superseded by RFC 2131) that allows a server to dynamically distribute IP addressing and configuration information to client (remote terminals) over a network. Normally the DHCP server provides the client with at least the following basic information - IP Address, Subnet Mask and Default Gateway.

Other information can be provided as well, such as Domain Name Service (DNS) server addresses and Windows Internet Name Service (WINS) server addresses. The system administrator configures the DHCP server with the options that are to be parsed out to each client.

Dynamic Host Configuration Protocol was derived from the Internet standard Bootstrap Protocol (BOOTP) (RFCs 951 and 1084), which allowed dynamic assignment of IP addresses (as well as remote booting of diskless workstations). In addition to supporting dynamic assignment of IP addresses, DHCP supplies all configuration data required by TCP/IP, plus additional data required for specific servers.

As will be explained in greater detail below, the DHCP potentially allows the network administrator to configure a plurality of client terminal by manually configuring just, one machine the DHCP server. Whenever a new host is plugged into the network segment that is served by the DHCP server (or an existing host is turned back on), the machine asks for a unique IP address, and the DHCP server assigns it one from the pool of available IP addresses.

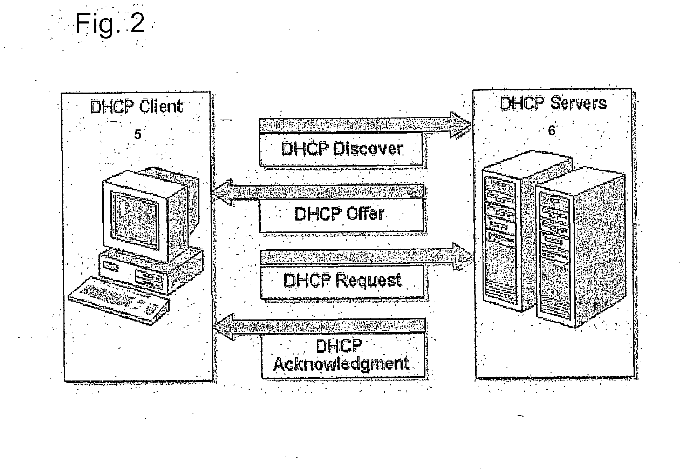

The DHCP client configuration process, as shown in Figure 2, involves just four steps. The DHCP client 5 asks for an IP address (DHCP Discover), is offered an address (DHCP Offer) by the DHCP server 6, accept the offer and requests the address DHCP Request), and is officially assigned the address (DHCP Acknowledge).

To make sure addresses are not wasted, the DHCP server 6 places an administrator-defined time limit on the address assignment, called a lease. Halfway through the lease period, the DHCP client 5 requests a lease renewal, and the DHCP server 6 extends the lease. This means that when a machine stops using its assigned IP address (for example, on being moved to another network segment or being retired), the lease expires, and the address is returned to the pool for reassignment.

Deploying DHCP on enterprise networks therefore provides the following benefits:
1. Safe and reliable network configuration;
   a DHCP minimises configuration errors caused by manual IP address configuration, such as typographical errors;
   b. DHCP minimises address conflicts caused by a currently assigned IP address accidentally being reissued to another computer;
2. Reduced network administration;
   a. TCP/IP configuration is centralized and automated;
   b. network administrators can centrally define global and subset-specific TCP/IP configurations;
   c. clients can be automatically assigned a full range of additional TCP/IP configuration values by using DHCP options;
   d. address changes for client configurations that must be updated frequently such as remote access clients that move around constantly, can be made efficiently and automatically when the client restarts in its new location; and
   e. most routers can forward DHCP configuration requests, eliminating the requirement of setting up a DHCP server on every subnet, unless there is another reason to do so.

As a result DHCP and its associated component form a powerful and indispensable tool within the IT industry. It is a key component of the TCP/IP suite and widely accepted as a major industry standard. However, despite this fact, using DHCP also presents a number of challenges and shortcomings when applied to the Building Management Systems.

A underlying principle of DHCP is that it relies on allocating IP addresses on a first-come-first-serve basis ie. the IP addresses are dynamically allocated. It is therefore inherent in a DHCP system that a DHCP client is not guaranteed the same IP address every time it re-joins the network, and consequently a typical service or application cannot rely on IP addresses alone to access information. This, in the IT industry, is resolved by using a naming convention (supported by the Domain Name Service, or DNS for short) in which each device is known by its unique name; the underlying services translate the name into an IP address that has been allocated by the DCHP server.

Within a BMS application, applications also refer to other applications or services using a naming convention with the underlying functions translating device names into their respective IP addresses. However, with any real-time closed loop control system, the use of dynamically allocated IP addresses presents a number of problems. It is not' uncommon for Controllers to perform automatic resets, known as Warm Resets, which unlike Cold Resets preserve existing control parameters (other than the IP address) and ensure that the system carries on functioning in the manner it did before the reset. If the IP address and other information were obtained dynamically, the warm reset together with other actions that the Controller may take will require the use of the DHCP services. Whilst this may be acceptable, the reliance on a DHCP server does raise the issue of the DHCP server becoming single point of failure i.e., loss of the server will mean that parts of the BMS are unable to communicate and be controlled normally. The consequence of this could be quite catastrophic, in some cases. The need for a reliable and deterministic control system such as the BMS dictates for statically allocated parameters that are guaranteed not to change during the operation of the system.

Also, a number of BMS consist of controllers that work in physically & geographically isolated locations. These controllers often use a dial-up mechanism to send information to the BMS Server as well as to other controllers in other locations. The use of a dial-up mechanism means that the DHCP cannot be used as a primary means of configuring these controllers.

As is apparent from the above, while the DHCP is commonly used within an It environment, it is unlikely in most circumstances to adequately address the needs of the building Systems & controls industry.

According to one aspect of the present invention, a building management system is provides comprising a front end device networked to a plurality of controller devices, each controller device being adapted to transmit a configuration data request if not ' sufficiently configured to perform its appointed role and the front-end device being adapted to respond to such a configuration, data request by broadcasting a configuration data response containing the required configuration data to all the controller devices, each broadcast configuration data response including sufficient information to enable each controller device to determine whether to act on or ignore the broadcast configuration data response.

According to another aspect of the present invention, a method of configuring a building management system comprising a front end device networked to at plurality of controller devices is provided, the method comprising:
a) programming each controller device to check whether or not it has sufficient configuration data to perform its appointed role and, if not, to transmit a configuration Data request; and
b) programming the front end device to respond to a configuration data request from a controllers device by broadcasting a configuration, data response to all the controller devices, each such configuration data response comprising the configuration data required by the controller device mat transmitted the configuration data request and sufficient information to enable each controller device to determine whether to act on or ignore the configuration data response.

Preferably, the configuration data responses are IP multicast transmissions, the controller devices all sharing the same IP multicast address.

Each configuration data response may include a controller device identifier identifying the controller device that requires the configuration data, each controller device being adapted to act only on a configuration data response containing its respective controller device identifier.

Each configuration data request may include a controller device identifier identifying the controller device sending the configuration data request, the front end device being adapted to check the controller device identifier in any incoming configuration data request in order to determine the configuration data required.

Preferably, each controller device is adapted to broadcast a configuration data request to all the other controller devices and the front end device, each such configuration data request including sufficient information to enable each device receiving it to determine whether to act on or ignore the configuration data request. Where this is the case, the configuration data requests are preferably IP multicast transmissions, the front end device and controller devices all sharing the same IP multicast address.

Each configuration data request and each configuration data response may include a transmission type identifier identifying the transmission type as a request or response, the controller devices being adapted to act only on responses and the front end device being adapted to act only on requests.

Each controller device may be adapted to check on power-up whether or not it has sufficient configuration data to perform its appointed role.

Each controller device may be adapted to retain, once configured, its configuration data in the event of a restart.

Each controller device may be adapted to re-transmit a configuration data request if it has not received an acceptable configuration data response within a predetermined interval.

As explained above, in a conventional BMS, each data transmission is directed towards one or more specific recipients each identified by a unique IP address (such transmissions sometimes being referred to as IP unicasting or point-to-point messaging However, in the present invention, each configuration data response is broadcast such that it is transmitted to all the controllers, the contents of the transmission or broadcasts itself enabling each controller to determine whether or not the transmission is of relevance to it. Likewise, configuration data requests from the controllers are preferably similarly broadcast

As noted, a preferred method of ensuring that each configuration data request and response are directed to all the controllers and the server is to make use of IP multicast transmissions. In IP multicasting, each device in a specified group is assigned the same IP address (a so-called multicast address) and any transmission sent to this address is routed by multicast routers to each device in that group. Thus the transmission concerted is in essence broadcast to as specified set or group of devices. This is in general to be preferred to forms of IP broadcasting in which each data transmission is sent to any and every device connected to a network, so as to avoid erroneously transmitting configuration data responses or requests to third party devices that may be present on the network - ie. by assigning the multicast address only to the front end device and the controllers, the BMS transmissions can be isolated from any other unrelated devices/hardware that may be sharing the same IP network.

An embodiment of the invention will now be described, by way of example, with reference to the accompanying Figures, in which:
Fig 1 is a schematic showing, in outline, the network layout of a standard Building Management System (prior art);
Fig 2 is a schematic illustrating the DHCP client configuration process (prior art);
Fig 3 is a schematic illustrating an Internet Protocol & UDP payload data transmission;
Fig 4 is a flow chart of a Controller configuration process in accordance with the preset invention, from the perspective of a Controller; and
Fig 5 is a flow chart of the configuration process of Fig 4, from the perspective of then Server.

A Building Management System according to the present embodiment of the invention comprises a conventional network, layout as described above in relation to Figure 1, ie. the system comprises a plurality of controllers 1 connected to a server 2 via one or more routers 3 so as to form a hierarchical network layout, with the server 2 connected to the backbone network and the controllers 1 clustered on one or more sub-networks.

The controllers 1 store all configuration data in long-term memory such as battery-backed RAM or EEPROM. or FLASH memory devices and that all devices, prior to configuration, will have all configuration parameters set to zero or a known value. Every controller also maintains a flag, known. as the Commissioning Flag, in its long-term memory. This flag is initialised to a "non-commissioned" state prior to the controller receiving its configuration data. Prior to its configuration, each controller is also assigned a unique device identifier which is hard coded or stored in its long term memory.

In order to make use of IP multicasting, the server 2 (there may be more than one) is required to register a multi-cast IP address, which currently lie in the range 224.0.0.0 through to 2,39.255.255.255, at all times. This allows the server 2 to receive data that is transmitter using the multi-cast address. All intermediate routers 3 are adapted to forward data addressed using this multi-cast address.

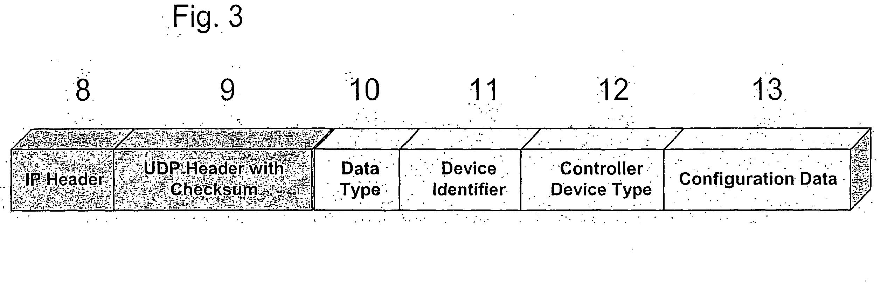

Referring now to Figure 3, the configuration data transmissions from the controllers and the server are encapsulated within an IP & UDP (User Datagram Protocol) payloads. These payloads comprise an IP header 7 and a UPD header 8. The UDP header 8 has a checksum option and it is recommended that this option be enabled so that the integrity of all data transfers can be maintained.

In addition to the IP and UDP headers 7, 8, each transmission also comprises the following data fields:
a) a Data Type field 9 containing data that indicates whether the transmission is a "configuration data request" (which identifies the transmission as originating from a controller requiting configuration data) or a "configuration data response" (which identifies the transmission as a response originating from the server);
b) a Device Identifier field 10 containing the unique device identifier of the controller that requires configuration data;
c) in the case of a typical BMS site, different controller types (in the sense of having different functions and/or roles), a Controller Device Type field 11 containing data that indicates the type of controller that requires configuration data; and
d) a Configuration Data field 12 - where the data transmission is a configuration request (ie. it originates from a controller requiring configuration data) no data will be contained in this field, however, where the data transmission is a configuration data response (ie. a response from the Server to a configuration request) this field will contain the required configuration data for the controller in question.

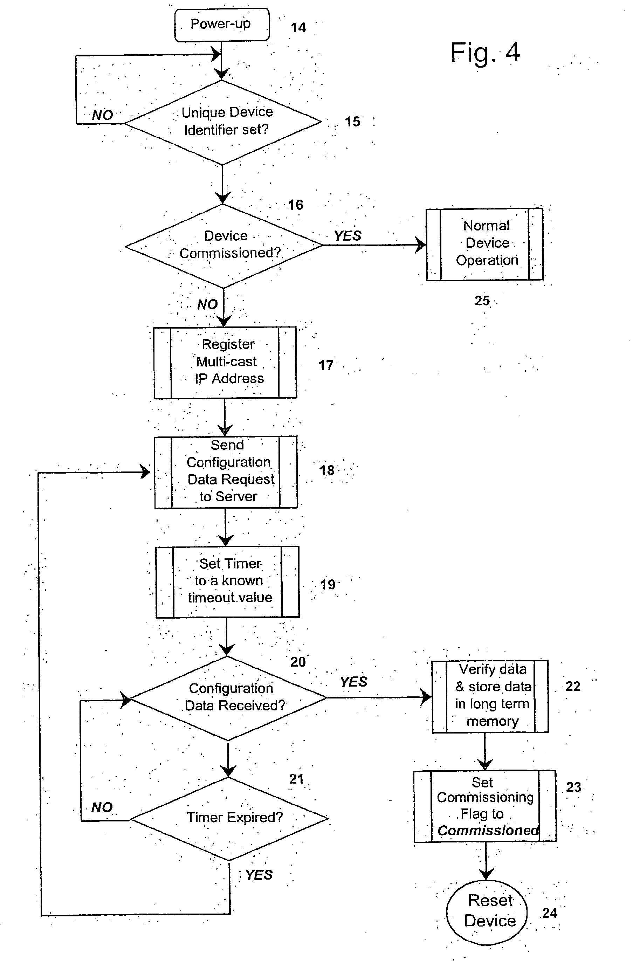

Referring now to the controller flow chart of Figure 4, upon power-up 14 a controller decides if it needs to request for configuration data from the server. This request is only made if the controller's checks indicate that it has been given a unique identifier (check 15) and is in non-commissioned state (check 16).

The controller register 17 he pre-determined multicast IP address - this allows the controller to send data to all devices using this IP address. It then sends a configuration request 18 to the server and since the Data Type is set to Request, all other controllers will ignore this data packet.

The controller then sets a timer 19 and awaits a response from the server. If the timer expires (check 21) before the response is received (check 20), a new configuration request 18 is dispatched. Once a response is received from the server, the controller versifies the data 22 and updates the configuration area within its long-term memory. It also sets the Commissioning Flag to "commissioned" state 23, thus ensuring that not further requests are sent to the server. The controller then performs a reset 24 and starts-up with the new configuration parameters - upon restart, the controller does not need to re-register the multicast IP address, but instead proceeds to normal operation of the device 25,

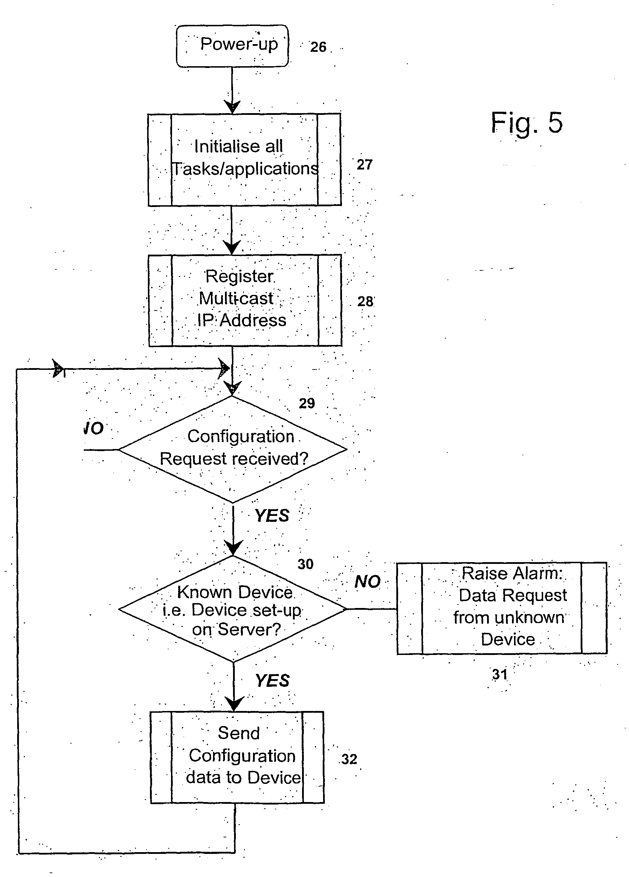

Referring now to the server flow chart of Figure 5, once the server has been powered up, 26, initialised all tasks and applications 27, and registered 28 the multicast IP address, the server waits 29 for any in-coming Configuration Request packet. Once received, it verifies 30 the Controller Identifier and Type against a locally stored database of controller configuration. If the Server does not recognise the device, it will generate as alarm 31 so that the operator can take appropriate action, otherwise it will send 32 the required configuration data to the device using the multicast IP address. Since the IP data packet contains a field identifying the Controller by its unique identifier, all other Controllers will ignore this data packet.

A comparison of the known method of configuring a BMS, as described above, with the configuration method described in relation to the present embodiment is shown below in Table: 1. As is apparent therefrom, in the present embodiment the configuration process is simplified, when compared to a standard BMS and configuration process, thus saving time and cost of installation and breducing the chances errors occurring during configuration process.

The technique described here is not confined to one specific BMS but instead can be used with any BMS that is based on IP technology.

The foregoing broadly describes the present invention, without limitation. Variations and modifications as would be apparent to those of ordinary skill in the art are intended to be comprised within the scope of this application.

**TABLE 1**

| **STAGE** | **USING KNOWN METHOD** | **USING METHOD OF PRESENT EMBODIMENT** |
|---|---|---|
| 1 | The installer lays-out the communication medium (or uses existing ones if appropriate) and powers-up the Controllers; this ensures that the Controller is operational. | Same as before. |
| 2 | The commissioning engineer partially configures each Controller on-site by providing a device id and unique IP address. | Only a unique device id need be provided. |
| 3 | On the front-end device, the set-up application requires the engineer to define each Controller by specifying its device id and IP address and inputting the appropriate additional configuration data. | Only the device id need be specified, with the additional configuration data being input as before - in both cases, the set-up application may validate the additional configuration data. |
| 4 | The additional input configuration data is downloaded individually to each of the Controllers using the specified IP addresses. Each Controller, upon receiving the additional data, performs a reset and restarts with the new parameters. | The additional configuration data for each controller is broadcast as a multi-cast transmission containing the specified device id. Each controller determines which transmission is appropriate to it and performs a reset and restart as before. |

## Claims

1. A building management system **characterised by** comprising a front end device networked to a plurality of controller devices (1), each controller device (1) being adapted to transmit a configuration data request if not configured to perform its appointed role and the front-end-device being adapted to respond to such a configuration data request by broadcasting a configuration data response containing the required a configurition data (13) to all the controller devices (1), each broadcast configuration data response including information to enable each controller device (1) to determine wether to act on or ignore the broadcast configuration data response.

2. A building management system according to claim 1, wherein the configuration data responses are IP multicast transmissions, the controller devices (1) all sharing the same IP multicast address.

3. A building management system according to claim 1 or 2, wherein each configuration data response includes a controller device (1) identifier identifying the controller device (1) that requires the configuration data (13), each controller device (1) being adapted to act only on a configuration data response containing its respective controller device identifier (11).

4. A building management system according to any one of claims 1 to 3, wherein each configuration data request includes a controller device identifier (11) identifying the controller device (1) sending the configuration data request, the front end device being adapted to check the controller device identifier (11) in any incoming configuration data request in order to determine the configuration data (13) required.

5. A building management system according to any preceding claim, wherein each controller device (1) is adapted to broadcast a configuration data request to all the other controller devices (1) and the front end device, each such configuration data request including information to enable each device receiving it to determine whether to act on or ignore the configuration data request.

6. A building management system according to claim 5, wherein the configuration data requests are IP multicast transmissions, the front end device and controller devices (1) all sharing the same IP multicast address.

7. A building management system according to claim 5 or 6, wherein each configuration data request and each configuration data response includes a transmission type identifier (10) identifying the transmission type a request or response, the controller devices (1) being adapted to act only on responses and the front end device being adapted to act only on requests.

8. A building management system according to any preceding claim, wherein each controller device (1) is adapted to check oil power up whether or not it has configuration data to perform its appointed role.

9. A building management system according to any preceding claim, wherein each controller device (1) is adapted to to retain, once configured, its configuration data in the event of a restart.

10. A building management system according to any preceding claim, wherein each controller device (1) is adapted to-re-transmit a configuration data request if it has not received a configuration data response within a a predetermined interval.

11. A method of configuring a building management system comprising a front end device networked to a plurality of controller devices (1), the method **characterised by** comprising:
a) programming each controller device (1) to check whether or not it has configuration data to perform its appointed role and, if not, to transmit a, configuration data request; and
b) programming the front end device to respond to a configuration data request from a controller device (1) by broadcasting a configuration data response to all the controller devices (1), each such configuration data response comprising the configuration data (13) required by the controller device that transmitted the configuration data request and information to enable each controller device (1) to determine whether to act on or ignore the configuration data response.

12. A method according to claim 11, comprising programming the front end device to send configuration data responses using an IP multicast address registered or to be registered by the controller devices (1).

13. A method according to claim 11 or 12, comprising programming the front end device to include a controller device identifier (11) identifying the controller device that requires the configuration data in each configuration data response and programming each controller device (1) to act only on a configuration data response comprising its respective controller device identifier (11).

14. A method according to claim 11, 12 or 13 comprising programming each controller device (1) include in each configuration data request it sends a controller device identifier (11) identifying itself and programming the front end device to check the controller device identifier (11) in any incoming configuration data request in order to determine the configuration data required.

15. A method according to any one of claims 11 to 14, comprising programming each controller device (1) to broadcast a configuration data request to all the other controller devices (1) and the front end device, each such configuration data request including information to enable each device receiving it to determine whether to act on or ignore the configuration data request.

16. A method according to claim 15, comprising programming the controller devices (1) to send configuration data requests using an IP multicast address registered or to be registered by all the controller devices (1) and the front end device.

17. A method according to claim 15 or 16, comprising programming the controller devices (1) and front end device to include a transmission type identifier (10) in any configuration data request or configuration data response being sent identifying the transmission type as a request or response and programming the controller devices (1) to act only on responses and the front end device to act only on requests.

18. A method according to any one of claims 11 to 17, comprising programming each controller device (1) to check on power up whether or not it has configuration data to perform its appointed role.

19. A method according to any one of claims 11 to 18 comprising programming each controller device (1) to retain, once configured, its configuration data in the event of a restant.

20. A method according to any one of claims 11 to 19, comprising programming each controller device (1) to re-transmit a configuration data request if it has hot received a configuration data response within a predetermined interval.

## Patentansprüche

1. Gebäudeleitsystem, **dadurch gekennzeichnet, dass** es ein mit einer Mehrzahl von Steuerungsgeräten (1) vernetztes Frontend-Gerät umfasst, wobei jedes Steuerungsgerät (1) angepasst ist, eine Konfigurationsdatenanforderung zu senden, wenn es nicht für die Durchführung der ihm zugewiesenen Aufgabe konfiguriert ist, und das Frontend-Gerät angepasst ist, auf eine derartige Konfigurationsdatenanforderung zu antworten, indem es eine die benötigten Konfigurationsdaten (13) enthaltende Konfigurationsdatenantwort an alle Steuerungsgeräte (1) sendet, wobei jede gesendete Konfigurationsdatenantwort Information enthält, die jedem Steuerungsgerät (1) ermöglicht zu bestimmen, ob es auf die gesendete Konfigurationsdatenantwort hin handeln oder sie ignorieren soll.

2. Gebäudeleitsystem nach Anspruch 1, wobei die Konfigurationsdatenantworten aus IP Multicast Übertragungen bestehen, wobei alle Steuerungsgeräte (1) gemeinsam die gleiche IP Multicast Adresse benutzen.

3. Gebäudeleitsystem nach Anspruch 1 oder 2, wobei jede Konfigurationsdatenantwort eine das Steuerungsgerät (1), das die Konfigurationsdaten (13) benötigt, identifizierende Steuerungsgerät (1) Kennung beinhaltet, wobei jedes Steuerungsgerät (1) angepasst ist, nur auf eine Konfigurationsdatenantwort hin zu handeln, die die ihm entsprechende Steuerungsgerätkennung (11) enthält.

4. Gebäudeleitsystem nach einem der Ansprüche 1 bis 3, wobei jede Konfigurationsdatenanforderung eine Steuerungsgerätkennung (11) enthält, die das Steuerungsgerät (1) identifiziert, das die Konfigurationsdatenanforderung sendet, wobei das Frontend-Gerät angepasst ist, die Steuerungsgerätkennung (11) in jeder eingehenden Konfigurationsdatenanforderung zu prüfen, um die Konfigurationsdaten (13), die benötigt werden, zu bestimmen.

5. Gebäudeleitsystem nach einem der vorhergehenden Ansprüche, wobei jedes Steuerungsgerät (1) angepasst ist, eine Konfigurationsdatenanforderung an alle anderen Steuerungsgeräte (1) und an das Frontend-Gerät zu senden, wobei jede derartige Konfigurationsdatenanforderung Information enthält, die jedem die Anforderung empfangenden Gerät ermöglicht zu bestimmen, ob es auf die gesendete Konfigurationsdatenantwort hin handeln oder sie ignorieren soll.

6. Gebäudeleitsystem nach Anspruch 5, wobei die Konfigurationsdatenanforderungen aus IP Multicast Übertragungen bestehen, und das Frontend-Gerät und die Steuerungsgeräte (1) gemeinsam die gleiche IP Multicast Adresse benutzen.

7. Gebäudeleitsystem nach Anspruch 5 oder 6, wobei jede Konfigurationsdatenanforderung und jede Konfigurationsdatenantwort eine Übertragungstyp-Kennung (10) beinhaltet, die den Übertragungstyp als Anforderung oder Antwort identifiziert, wobei die Steuerungsgeräte (1) angepasst sind, nur auf Antworten hin zu handeln, und das Frontend-Gerät angepasst ist, nur auf Anforderungen hin zu handeln.

8. Gebäudeleitsystem nach einem der vorhergehenden Ansprüche, wobei jedes Steuerungsgerät (1) angepasst ist, beim Hochfahren zu prüfen, ob es Konfigurationsdaten zum Durchführen seiner ihm zugewiesenen Aufgabe enthält.

9. Gebäudeleitsystem nach einem der vorhergehenden Ansprüche, wobei jedes einmal konfigurierte Steuerungsgerät (1) angepasst ist, seine Konfigurationsdaten für den Fall eines Neustarts aufzubewahren.

10. Gebäudeleitsystem nach einem der vorhergehenden Ansprüche, wobei jedes Steuerungsgerät (1) angepasst ist, eine Konfigurationsdatenanforderung erneut zu senden, wenn es innerhalb eines vorherbestimmten Intervalls keine Konfigurationsdatenantwort empfangen hat.

11. Verfahren zum Konfigurieren eines Gebäudeleitsystems umfassend ein mit einer Mehrzahl von Steuerungsgeräten (1) vernetztes Frontend-Gerät, wobei das Verfahren **dadurch gekennzeichnet ist, dass** es umfasst:
a) das Programmieren jedes Steuerungsgeräts (1) um zu prüfen, ob es Konfigurationsdaten zum Durchführen seiner ihm zugewiesenen Aufgabe enthält und, falls nein, eine Konfigurationsdatenanforderung zu senden; und
b) das Programmieren des Frontend-Geräts, um auf eine Konfigurationsdatenanforderung von einem Steuerungsgerät (1) zu antworten, indem es eine Konfigurationsdatenantwort an alle Steuerungsgeräte (1) sendet, wobei jede derartige Konfigurationsdatenantwort die von dem Steuerungsgerät, das die Konfigurationsdatenanforderung gesendet hat, benötigten Konfigurationsdaten (13) sowie Information enthält, die jedem Steuerungsgerät (1) ermöglichen zu bestimmen, ob es auf die Konfigurationsdatenantwort hin handeln oder diese ignorieren soll.

12. Verfahren nach Anspruch 11, umfassend das Programmieren des Frontend-Geräts, Konfigurationsdatenantworten unter Einsatz einer IP Multicast Adresse zu senden, die von den Steuerungsgeräten (1) registriert wurden oder zu registrieren sind.

13. Verfahren nach Anspruch 11 oder 12, umfassend das Programmieren des Frontend-Geräts, eine Steuerungsgerätkennung (11), die das die Konfigurationsdaten benötigende Steuerungsgerät identifiziert, in jede Konfigurationsdatenantwort aufzunehmen, und das Programmieren jedes Steuerungsgeräts (1), nur auf eine Konfigurationsdatenantwort hin zu handeln, die die ihm entsprechende Steuerungsgerätkennung (11) enthält.

14. Verfahren nach Anspruch 11, 12 oder 13, umfassend das Programmieren jedes Steuerungsgeräts (1), in jede von ihm gesendete Konfigurationsdatenanforderung eine es identifizierende Steuerungsgerätkennung (11) aufzunehmen, und das Programmieren des Frontend-Geräts, die Steuerungsgerätkennung (11) in jeder eingehenden Konfigurationsdatenanforderung zu prüfen, um die benötigten Konfigurationsdaten zu bestimmen.

15. Verfahren nach einem der Ansprüche 11 bis 14, umfassend das Programmieren jedes Steuerungsgeräts (1), eine Konfigurationsdatenanforderung an alle Steuerungsgeräte (1) und an das Frontend-Gerät zu senden, wobei jede derartige Konfigurationsdatenanforderung Information enthält, die jedem die Information empfangenden Gerät ermöglicht zu bestimmen, ob es auf die Konfigurationsdatenanforderung hin handeln oder sie ignorieren soll.

16. Verfahren nach Anspruch 15, umfassend das Programmieren der Steuerungsgeräte (1), Konfigurationsdatenanforderungen unter Einsatz einer IP Multicast Adresse zu senden, die von allen Steuerungsgeräten (1) und dem Frontend-Gerät registriert wurden oder zu registrieren sind.

17. Verfahren nach Anspruch 15 oder 16, umfassend das Programmieren der Steuerungsgeräte (1) und das Frontend-Geräts, in jede Konfigurationsdatenanforderung oder Konfigurationsdatenantwort, die gesendet wird, eine Übertragungstyp-Kennung (10) aufzunehmen, die den Übertragungstyp als Anforderung oder Antwort identifiziert, und das Programmieren der Steuerungsgeräte (1), nur auf Antworten hin zu handeln, und des Frontend-Geräts, nur auf Anforderungen hin zu handeln.

18. Verfahren nach einem der Ansprüche 11 bis 17, umfassend das Programmieren jedes Steuerungsgeräts (1) beim Hochfahren zu prüfen, ob es Konfigurationsdaten zum Durchführen seiner ihm zugewiesenen Aufgabe enthält.

19. Verfahren nach einem der Ansprüche 11 bis 18, umfassend das Programmieren jedes einmal konfigurierten Steuerungsgeräts (1), seine Konfigurationsdaten für den Fall eines Neustarts aufzubewahren.

20. Verfahren nach einem der Ansprüche 11 bis 19, umfassend das Programmieren jedes Steuerungsgeräts (1), eine Konfigurationsdatenanforderung erneut zu senden, wenn es innerhalb eines vorherbestimmten Intervalls keine Konfigurationsdatenantwort empfangen hat.

## Revendications

1. Système de gestion de bâtiments, **caractérisé en ce qu'**il comprend un dispositif frontal en réseau avec une pluralité de dispositifs de commande (1), chaque dispositif de commande (1) étant apte à transmettre une demande de données de configuration s'il n'est pas configuré pour effectuer son rôle prévu et le dispositif frontal étant apte à répondre à une telle demande de données de configuration en diffusant une réponse de données de configuration contenant les données de configuration requises (13) à tous les dispositifs de commande (1), chaque réponse de données de configuration diffusée comprenant des informations pour permettre à chaque dispositif de commande (1) de déterminer s'il faut utiliser ou ignorer la réponse de données de configuration diffusée.

2. Système de gestion de bâtiments selon la revendication 1, dans lequel les réponses de données de configuration sont des transmissions de multidiffusion IP, les dispositifs de commande (1) partageant tous la même adresse de multidiffusion IP.

3. Système de gestion de bâtiments selon la revendication 1 ou 2, dans lequel chaque réponse de données de configuration comprend un identifiant de dispositif de commande (1) identifiant le dispositif de commande (1) qui nécessite les données de configuration (13), chaque dispositif de commande (1) étant apte à utiliser uniquement une réponse de données de configuration contenant son identifiant de dispositif de commande (11) respectif.

4. Système de gestion de bâtiments selon l'une quelconque des revendications 1 à 3, dans lequel chaque demande de données de configuration comprend un identifiant de dispositif de commande (11) identifiant le dispositif de commande (1) envoyant la demande de données de configuration, le dispositif frontal étant apte à contrôler l'identifiant de dispositif de commande (11) dans toute demande de données de configuration entrante pour déterminer les données de configuration (13) requises.

5. Système de gestion de bâtiments selon l'une quelconque des revendications précédentes, dans lequel chaque dispositif de commande (1) est apte à diffuser une demande de données de configuration à tous les autres dispositifs de commande (1) et au dispositif frontal, chaque demande de données de configuration comprenant des informations pour permettre à chaque dispositif la recevant de déterminer s'il faut utiliser ou ignorer la demande de données de configuration.

6. Système de gestion de bâtiments selon la revendication 5, dans lequel les demandes de données de configuration sont des transmissions de multidiffusion IP, le dispositif frontal et les dispositifs de commande (1) partageant tous la même adresse de multidiffusion IP.

7. Système de gestion de bâtiments selon la revendication 5 ou 6, dans lequel chaque demande de données de configuration et chaque réponse de données de configuration comprennent un identifiant de type de transmission (10) identifiant le type de transmission en tant que demande ou en tant que réponse, les dispositifs de commande (1) étant aptes à n'utiliser que des réponses et le dispositif frontal étant apte à n'utiliser que des demandes.

8. Système de gestion de bâtiments selon l'une quelconque des revendications précédentes, dans lequel chaque dispositif de commande (1) est apte à contrôler, à la mise sous tension, s'il a des données de configuration pour effectuer son rôle prévu.

9. Système de gestion de bâtiments selon l'une quelconque des revendications précédentes, dans lequel chaque dispositif de commande (1) est apte à conserver, une fois configuré, ses données de configuration en cas de redémarrage.

10. Système de gestion de bâtiments selon l'une quelconque des revendications précédentes, dans lequel chaque dispositif de commande (1) est apte à retransmettre une demande de données de configuration s'il n'a pas reçu de réponse de données de configuration dans un intervalle prédéterminé.

11. Procédé de configuration d'un système de gestion de bâtiments comprenant un dispositif frontal en réseau avec une pluralité de dispositifs de commande (1), le procédé étant **caractérisé en ce qu'**il comprend :
a) la programmation de chaque dispositif de commande (1) pour vérifier s'il a des données de configuration pour effectuer son rôle prévu et, si tel n'est pas le cas, transmettre une demande de données de configuration ; et
b) la programmation du dispositif frontal pour répondre à une demande de données de configuration d'un dispositif de commande (1) en diffusant une réponse de données de configuration à tous les dispositifs de commande (1), chaque telle réponse de données de configuration comprenant les données de configuration (13) requises par le dispositif de commande qui a transmis la demande de données de configuration et des informations pour permettre à chaque dispositif de commande (1) de déterminer s'il faut utiliser ou ignorer la réponse de données de configuration.

12. Procédé selon la revendication 11, comprenant la programmation du dispositif frontal pour envoyer des réponses de données de configuration en utilisant une adresse de multidiffusion IP enregistrée ou à enregistrer par les dispositifs de commande (1).

13. Procédé selon la revendication 11 ou 12, comprenant la programmation du dispositif frontal pour inclure un identifiant de dispositif de commande (11) identifiant le dispositif de commande qui demande les données de configuration dans chaque réponse de données de configuration et la programmation de chaque dispositif de commande (1) pour n'utiliser qu'une réponse de données de configuration comprenant son identifiant de dispositif de commande (11) respectif.

14. Procédé selon la revendication 11, 12 ou 13, comprenant la programmation de chaque dispositif de commande (1) pour inclure dans chaque demande de données de configuration qu'il envoie un identifiant de dispositif de commande (11) l'identifiant et la programmation du dispositif frontal pour contrôler l'identifiant de dispositif de commande (11) dans toute demande de données de configuration entrante pour déterminer les données de configuration requises.

15. Procédé selon l'une quelconque des revendications 11 à 14, comprenant la programmation de chaque dispositif de commande (1) pour diffuser une demande de données de configuration à tous les autres dispositifs de commande (1) et au dispositif frontal, chaque demande de données de configuration comprenant des informations pour permettre à chaque dispositif la recevant de déterminer s'il faut utiliser ou ignorer la demande de données de configuration.

16. Procédé selon la revendication 15, comprenant la programmation des dispositifs de commande (1) pour envoyer des demandes de données de configuration en utilisant une adresse de multidiffusion IP enregistrée ou à enregistrer par tous les dispositifs de commande (1) et le dispositif frontal.

17. Procédé selon la revendication 15 ou 16, comprenant la programmation des dispositifs de commande (1) et du dispositif frontal pour inclure un identifiant de type de transmission (10) dans toute demande de données de configuration envoyée ou dans toute réponse de données de configuration envoyée qui identifie le type de transmission en tant que demande ou en tant que réponse et la programmation des dispositifs de commande (1) pour n'utiliser que des réponses et du dispositif frontal pour n'utiliser que des demandes.

18. Procédé selon l'une quelconque des revendications 11 à 17, comprenant la programmation de chaque dispositif de commande (1) pour contrôler, à la mise sous tension, s'il a des données de configuration pour effectuer son rôle prévu.

19. Procédé selon l'une quelconque des revendications 11 à 18, comprenant la programmation de chaque dispositif de commande (1) pour conserver, une fois configuré, ses données de configuration en cas de redémarrage.

20. Procédé selon l'une quelconque des revendications 11 à 19, comprenant la programmation de chaque dispositif de commande (1) pour retransmettre une demande de données de configuration s'il n'a pas reçu de réponse de données de configuration dans un intervalle prédéterminé.
